# EUROPÄISCHE PATENTSCHRIFT

(11) **EP 0 852 764 B1**
(45) Veröffentlichungstag und Bekanntmachung des Hinweises auf die Patenterteilung: **06.10.1999**
(21) Anmeldenummer: 97924200.5
(22) Anmeldetag: 17.06.1997
(51) Int. Cl.: G06F 11/14

(54) **VORRICHTUNG ZUM ÜBERTRAGEN VON DATEN**
DATA TRANSMISSION SYSTEM
DISPOSITIF DE TRANSMISSION DE DONNEES

(30) Priorität: 17.06.1996 DE 19624140
(43) Veröffentlichungstag der Anmeldung: 15.07.1998
(73) Patentinhaber: Koninklijke Philips Electronics N.V., 5621 BA Eindhoven (NL); Philips Patentverwaltung GmbH, 22335 Hamburg (DE)
(72) Erfinder: MORES, Robert, NL-5656 AA Eindhoven (NL)
(74) Vertreter: von Laue, Hanns-Ulrich, Dipl.-Ing.
(86) Internationale Anmeldenummer: IB9700709
(87) Internationale Veröffentlichungsnummer: WO9749033

(56) Entgegenhaltungen:
- EP-A- 0 260 625
- EP-A- 0 608 524
- EP-A- 0 701 194
- WO-A-86/02183
- DE-A- 3 731 142
- GB-A- 2 292 238

## Beschreibung

Die Erfindung betrifft ein elektronisches System zum Übertragen von Daten zwischen einer Anzahl von Stationen, die über einen gemeinsamen Bus miteinander verbunden sind.

Bei derartigen bekannten Systemen ist zumindest in einem Teil der Stationen je ein Mikrocontroller vorgesehen, der die Stationen steuert und der über eine Schnittstellenschaltung, die als Sende/Empfangsschaltung ausgebildet ist und im folgenden auch als Signalumformer bezeichnet wird, mit dem Bus verbunden ist und darüber Informationen aussendet und empfängt. Ferner ist häufig eine Zeitüberwachungsschaltung, im folgenden Watchdog genannt, vorhanden, der ein Signal an den Mikrocontroller liefert, wenn er länger als eine vorgegebene Zeitdauer nicht ein Signal vom Mikrocontroller erhalten hat. Diese Elemente oder zumindest ein Teil davon werden über eine Spannungsregelschaltung gespeist, wenn z.B. bei Verwendung im Kraftfahrzeug die zur Verfügung stehende Spannung höher ist als die Betriebsspannung der Elemente. Unter vorgegebenen Bedingungen kann der Mikrocontroller alle Elemente der Stationen in einen stromsparenden Betriebszustand versetzen, um beispielsweise eine Batterie als Energiequelle zu schonen und durch lokale Ereignisse, oder durch Signale über den Bus kann die Station wieder in einen Normal-Betriebszustand geweckt werden.

Durch Störungen von außen oder in einzelnen Elementen können Betriebszustände der Station auftreten, die unerwünscht sind. Üblich ist es, daß der Mikrocontroller gegebenenfalls unerwünschte Betriebszustände erfaßt und durch geeignete Maßnahmen die Station wieder in einen für die Anwendung sinnvollen Betriebszustand zurückführt. Der Mikrocontroller wird wiederum von der Watchdog überwacht und bei Fehlfunktion durch ein Rücksetz-Signal wieder in einen definierten Ausgangszustand gebracht.

Ein wesentlicher Nachteil dabei ist, daß ein dauerhaft gestörter Mikrocontroller, der auch aus dem Ausgangszustand heraus nicht mehr erwartungsgemäß funktioniert, die anderen Elemente der Station nicht mehr in einen definierten Rückfall-Betriebszustand führen kann und unter Umständen das gesamte System mit mehreren Stationen gestört wird. Dieselbe Situation ergibt sich, wenn beispielsweise nur die Spannungsversorgung des Mikrocontroller gestört ist. Neben der Störung des gesamten Systems können sich auch für die Anwendung unvorteilhafte Wirkungen ergeben.

Ein weiterer Nachteil besteht darin, daß die betroffene Station in solchen Situationen durch den Mikrocontroller nicht mehr in einen Stromsparbetrieb geführt werden kann, da die für diese Anforderung über das System verbreiteten seriellen Daten oder Informationen in der Station selbst nicht mehr ausgewertet werden können.

Die Aufgabe der Erfindung ist es, ein System anzugeben, in dem sich in einer Station auch dann einen für die Anwendung sinnvollen Riickfall-Betriebszustand autonom einstellt, wenn der betreffende Mikrocontroller dauerhaft gestört bleibt.

Diese Aufgabe wird erfindungsgemäß durch die im Patentanspruch 1 angegebenen Merkmale gelöst. Patentanspruch 1 ist gegenüber den aus Dokument DE-A-37 31 142 bekannten Merkmalen abgegrenzt.

Das grundlegende Prinzip der Erfindung ist, daß der Mikrocontroller mit möglichst großer Sicherheit betrieben wird und dieser dann alle anderen Element bei Bedarf in einen entsprechenden Rückfall-Betrieb versetzen kann, und bei Ausfall des Mikrocontroller selbst die verbleibenden Elemente geschlossen und selbsttätig einen der Anwendung entsprechend möglichst optimalen Rückfall-Betrieb einstellen, und zwar hinsichtlich des Sicherheitsanspruches der Anwendung, der Stromsparanforderung und des Störverhaltens gegenüber dem gesamten System. Von besonderer Bedeutung ist dabei die feste, unveränderliche logische Verknüpfung von Signalen und damit Funktionen der einzelnen Elemente, wie sie beispielsweise durch monolithische Integration der Elemente möglich ist. Dieses Prinzip kann bei konkreten Anwendungsfällen zweckmäßig ausgestaltet werden.

Eine Ausgestaltung ist, daß der Watchdog und der zweite Spannungsregler derart miteinander verknüpft werden, daß bei einem ersten Reset-Signal des Watchdogs beispielsweise durch einen Softwarefehler der zweite Spannungsregler zunächst in dem vom Mikrocontroller zuvor definierten Zustand bleibt und bei wiederholtem Reset z. B. aufgrund einer dauerhaften Störung beim Mikrocontroller der zweite Spannungsregler abgeschaltet wird, damit die anwendungsspezifischen Elemente der Station nicht unkontrolliert weiter versorgt und damit betrieben werden. Alternativ kann die zweite Spannungsregler auch bereits unmittelbar beim ersten Reset abgeschaltet werden.

Eine weitere Ausgestaltung ist, daß der Watchdog, die beiden Versorgungsspannungen und der Signalumformer derart miteinander verknüpft werden, daß bei einer aufgrund wiederholten Resets festgestellten dauerhaften Störung des Mikrocontroller die beiden Spannungsversorgungen und der Signalumformer dann abgeschaltet werden, wenn der Watchdog in einer erweiterten Funktion feststellt, daß über einen gewissen Zeitraum keine seriellen Daten mehr übertragen werden und sich das gesamte System daher offensichtlich in einem Stromsparbetrieb befindet, so daß die Stromsparanforderung auch bei der fehlerhaften Station erfüllt wird.

Eine weitere Ausgestaltung ist, daß der Watchdog und die zweite Spannungsregler derart miteinander verknüpft werden, daß die zweite Spannungsregler erst durch mindestens einen erfolgreichen Rücksetzvorgang der Watchdog durch den Mikrocontroller (Trigger) aktiviert werden kann, so daß während der Startphase des Mikrocontroller und auch in durch Fehler bedingten verlängerten Startphasen des Mikrocontroller die anwendungsspezifischen Elemente nicht unkontrolliert betrieben werden.

Eine weitere Ausgestaltung ist, daß der Watchdog und die eine Versorgunsspannung derart miteinander verknüpft werden, daß der Watchdog in einer erweiterten Funktion die eine Versorgungsspannung aus einem Stromsparbetrieb heraus zyklisch aktivieren und damit die gesamte Station wecken kann, um damit einige Grundfunktionen der Station zu gewährleisten und gleichzeitig Strom zu sparen.

Eine weitere Ausgestaltung ist, daß der Signalumformer und die eine Versorgunsspannung derart miteinander verknüpft werden, daß der Signalumformer in seinem Stromsparbetrieb die Übertragungsaktivitäten hinsichtlich der seriellen Daten im System noch überwachen kann und aufgrund einer übertragenen Weckanforderung einer anderen Station die eigene Station durch selbsttätiges Aktivieren der einen Versorgunsspannung vornehmen kann.

Eine weitere Ausgestaltung ist, daß der Watchdog, die beiden Versorgungsspannungen und der Signalumformer derart miteinander verknüpft werden, daß diese bei Wechseln der Betriebszustände der Station vorzugsweise über ein Ansteuersignal so angesteuert werden, daß die einzelnen Elemente ihre spezifischen Betriebszustände nur gemeinsam und zeitgleich wechseln, so daß dadurch unerwünschte Zwischen-Betriebszustände verhindert werden und die Anforderungen der Anwendung hinsichtlich Sicherheit und Stromeinsparung gewährleistet werden, wobei dieses Signal als ein durch bekannte Sicherungsverfahren qualifiziertes serielles oder paralleles Ansteuersignal an eine integrierte Element mit den einzelnen Grundelemente ausgeführt sein kann.

Eine weitere Ausgestaltung ist, daß der Watchdog, der Signalumformer und eine gesonderte Schaltung zur Erkennung von lokalen Weckanforderungen derart miteinander verknüpft werden, daß die zyklischen, lokalen und die übertragenen Weckanforderungen, je nachdem ob sich die Station in einem Bereitschaftszustand oder einem Stromsparbetrieb befindet, umgesetzt werden in
eine Benachrichtigung des Mikrocontroller beispielsweise durch Interrupt bei ordnungsgemäßem Programmablauf,
ein Rücksetzen des Mikrocontroller in seinen Ausgangszustand und damit einen Neustart des Programmes,
um je nach momentanem Betriebszustand ein möglichst schnelles Wecken der Station zu erreichen.

Eine weitere Ausgestaltung ist, daß der Watchdog, der Signalumformer und die zusätzliche Überwachungsschaltung derart miteinander verknüpft werden, daß nach einem Neustart des Programmablaufes beim Mikrocontroller die Ursache und Herkunft des Reset ermittelt werden kann, und der Mikrocontroller dadurch die Historie vor dem Reset ermitteln kann und den Programmablauf z.B. durch Auslassen eines Einlernvorgangs optimieren und die Verwaltung von Daten z.B. durch Wiederverwendung bereits erzeugter Daten optimieren kann, wobei die Unterscheidung der Resetquellen beispielsweise berücksichtigt:
einen allerersten Systemstart nach einem ersten Anschließen an die Eingangsspannung, einen Reset des Watchdog bei der Überwachung des Programmablaufes,
einen Reset zum zyklischen Wecken des Systemes aus einem Bereitschaftsbetrieb oder Stromsparbetrieb durch eine erweiterte Funktion des Watchdog,
einen Reset durch eine Weckanforderung, die aufgrund einer Anforderung aus der Anwendung an die Station ermittelt wurde,
einen Reset aufgrund von Unterspannungsbedingungen an der einen Versorgungsspannung und damit der Mikrocontroller Versorgung,
einen Reset als erneuten Startversuch aus einem für bestimmte Zeit eingehaltenen Rückfall-Betrieb, z. B. wegen Übertemperatur,
einen Reset als Rückfallmaßnahme, wenn ein Interrupt nicht durch den Mikrocontroller beantwortet wurde.

Eine weitere Ausgestaltung ist, daß der Watchdog, der Signalumformer und die zusätzliche Überwachungsschaltung derart miteinander verknüpft werden, daß die durch Warnfunktionen, Fehleranzeigen und Resetquellen der einzelnen Elemente eingeleiteten Aktionen zur Einstellung eines Rückfall-Betriebes der gesamten Station hinsichtlich der Vorgehensweise anwendungsbezogen eingeteilt werden können in
eine Benachrichtigung des Mikrocontroller beispielsweise durch Interrupt bei ordnungsgemäßem Programmablauf,
ein Rücksetzen des Mikrocontroller in seinen Ausgangszustand und damit einen Neustart des Programmes,
ein dauerhaftes Rücksetzen des Mikrocontroller und selbsttätiges, geschlossenes Einstellen des für die Anwendung sinnvollsten Rückfall-Betriebes der Station durch die verbleibenden Elemente.

Sowohl die Verknüpfung der verschiedenen Ansteuersignale und Funktionen der einzelnen Grundelemente als auch der Rückfall-Betriebszustand kann mittels nichtflüchtiger Speicher auf einer integrierten Schaltung anwendungsspezifisch programmiert werden.

Als Vorteile ergeben sich aus der Verknüpfung der Funktionen und Ansteuersignale der einzelnen Grundelemente
- ein geschlossenes, fiir die Anwendung optimales Rückfallverhalten auch für den Fall, daß der Mikrocontroller dauerhaft gestört bleibt,
- eine gesicherte Stromeinsparung, durch autonomes Abschalten auch bei fehlerhaftem Mikrocontroller,
- eine sicherere Funktion des Systemes aufgrund der gesichert reduzierten Anzahl von möglichen Betriebszuständen in einer Station,
- optimalere operative Programmabläufe durch Feststellung der Resetquellen,
- definierte Systemstarts durch Mikrocontroller-unabhängige Kontrolle der Versorgungsspannungen,
- bessere Möglichkeiten zur Realisierung von Ruhestromkonzepten.

Ausführungsbeispiele der Erfindung werden nachfolgend anhand der Zeichnung näher erläutert. Es zeigen
Fig. 1 ein Blockschaltbild einer erfindungsgemäßen Station,
Fig. 2 bis 4 Diagramme von Zustandsübergängen.

Als Ausführungsbeispiel sei eine Anwendung aus der Kraftfahrzeugelektronik erläutert.

In dieser Anwendung sind bis zu 30 Stationen in einem System vernetzt, wobei jede der einzelnen Stationen unterschiedliche sicherheitsrelevante Aufgaben wahrnimmt und das gesamte System hinsichtlich der Stromaufnahme optimiert sein muß, damit auch längere Parkdauern eines Fahrzeuges die Batterie des Bordnetzes nicht zu sehr entladen.

Die sichere Funktion wird durch den sicheren Betrieb der Station und durch deren definiertes Rückfallverhalten im Fehlerfall erreicht. Hierfür wird in jeder Station eine integrierte Element mit den einzelnen Grundelemente Watchdog, zwei Versorgungsspannungen und Signalumformer verwendet.

Als erste Maßnahme werden die Ansteuersignale der einzelnen Elemente auf der integrierten Schaltung derart miteinander verknüpft, daß nur noch die für die Anwendung nötigen sieben Betriebszustände einer gesamten Station möglich sind, wobei drei der sieben Betriebszustände operative Betriebszustände für die Anwendung sind
der Normalbetrieb (NB),
der Bereitschafts-Betrieb (BB),
der Stromspar-Betrieb (SB),
und vier Start- bzw. Rückfall-Betriebszustände sind,
der Kaltstart (KS),
der Warmstart (WS),
der Rückfall-Betrieb mit Spannungsversorgung (VR),
und der Rückfall-Betrieb ohne Spannungsversorgung (UR).

Die Stationen wechseln im wesentlichen je nach Anforderung aus der Anwendung zwischen Normalbetrieb und Stromsparbctrieb bzw. Bereitschaftsbetrieb hin und her, wobei in dem Bereitschaftsbetrieb ein schnellerer Übergang in den Normalbetrieb und eine geringere Stromeinsparung erreicht wird als beim Stromsparbetrieb.

Die Reduzierung der möglichen Betriebszustände wird dadurch sichergestellt, daß die einzelnen Elemente durch ein einziges serielles Codewort vom Mikrocontroller an die integrierte Schaltung nur gemeinsam in einen anderen Betriebszustand geführt werden können.

Die Verknüpfung ermöglicht auch bei dauerhaft gestörtem Mikrocontroller die Feststellung des für die Anwendung optimalen Rückfallverhaltens und das Einstellen eines geschlossenes Rückfallverhaltens.

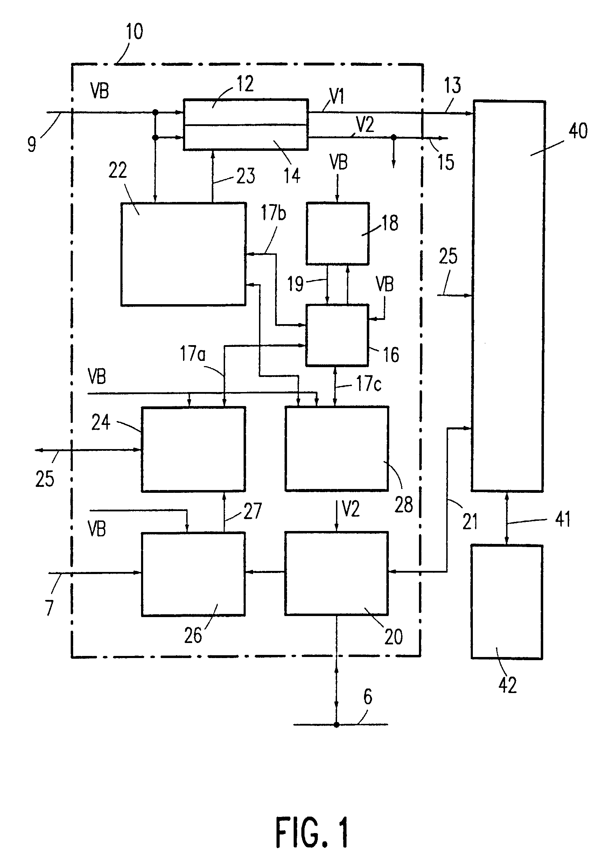

In Fig. 1 ist ein Blockschaltbild einer erfindungsgemäßen Station dargestellt. Diese enthält eine integrierte Schaltung 10 mit einigen Elementen, die nachfolgend näher erläutert werden, und einen Mikrocontroller 40, der mit der integrierten Schaltung 10 verbunden ist und üblicherweise ebenfalls als integrierte Schaltung ausgeführt ist. Der Mikrocontroller 40 steuert über eine Verbindung 41 Peripherieschaltungen 42, die von der Anwendung abhängen und beispielsweise Schalter für Verbraucher mit höherer Leistung enthalten können. Die integrierte Schaltung 10 ist außerdem mit einem Bus 6 verbunden, an dem weitere Stationen angeschlossen sind, und weist einen Eingang 7 auf, über den sogenannte Weckanforderungen zugeführt werden, die beispielsweise von einem handbetätigten Schalter oder von Sensoren stammen. Über einen Anschluß 9 erhält die integrierte Schaltung 10 eine Betriebsspannung, die höher ist als die zur Versorgung des Mikrocontrollers 40, der Peripherieschaltung 42 sowie bestimmter Elemente der integrierten Schaltung 10 erforderlich ist.

Diese mit VB bezeichnete Versorgungsspannung wird zwei Spannungsreglern 12 und 14 zugeführt, die daraus die niedrigere Versorgungsspannung der entsprechenden Schaltungen erzeugen. Der Spannungsregler 12 erzeugt eine Spannung V1, die über die Leitung 13 nur dem Mikrocontroller 40 zugeführt wird. Der Spannungsregler 14 erzeugt eine Spannung V2, die innerhalb der integrierten Schaltung 10 einer Sende-Empfangsschaltung 20 sowie im übrigen der Peripherieschaltung 42 zugeführt wird. Die Spannungsregler 12 und 14 können von einer Überwachungsschaltung 22 über die Leitung 23 einzeln oder gemeinsam abgeschaltet werden.

Die integrierte Schaltung 10 enthält ferner einen Oszillator 18, der eine Watchdog-Zeitüberwachungsschaltung 16 steuert. Der Watchdog kann auch außerhalb der integrierten Schaltung 10, vorzugsweise im Mikrocontroller, enthalten sein. Ferner ist eine Schnittstellenschaltung 28 vorgesehen, die vom Mikrocontroller 40 Steuerwörter empfängt oder insbesondere Statuswörter überträgt. Eine Rücksetz-Steuerschaltung 24 erzeugt auf der Leitung 25 ein Rücksetzsignal oder ein Unterbrechungssignal für den Mikrocontroller 40 oder empfängt von diesem ein Neustart-Signal, das die Überwachungszeit neu startet. Eine Schaltung 26 setzt die über dem Eingang 7 oder von der Sende-Empfangsschaltung 20 empfangenen Wecksignale in Steuersignale für die Steuerschaltung 24 um.

Der Watchdog 16 ist über die Verbindung 17c mit der Schnittstellenschaltung 28 verbunden, um durch Steuerwörter vom Mikrocontroller 40 auf bestimmte Überwachungszeiten eingestellt werden zu können und um die eingestellten Überwachungszeiten und gegebenenfalls weitere Zustände an den Mikrocontroller melden zu können. Ferner ist die Watchdog-Schaltung 16 über eine Verbindung 17a mit der Steuerschaltung 24 verbunden, um an diese Rücksetz-Signale oder Unterbrechungssignale für den Mikrocontroller 40 zu übertragen oder ein Neustart-Signal vom Mikrocontroller zu empfangen. Ferner ist die Watchdog-Schaltung 16 über eine Verbindung 17b mit der Überwachungsschaltung 22 verbunden, um über diese die Spannungsregler 12 und 14 einzuschalten bzw. abzuschalten. Außerdem ist die Schnittstellenschaltung 28 mit der Überwachungsschaltung 22 verbunden, so daß die Spannungsregler 12 und 14 auch durch Steuersignale vom Mikrocontroller 40 abgeschaltet werden können.

Die Überwachungsschaltung 22 überwacht die ungeregelte Eingangsspannung und kann dabei feststellen, ob die Spannung durch "Jump-Start" verdoppelt wurde und anwendungsbezogene Elemente durch Abschalten geschützt werden müssen. Die Überwachungsschaltung stellt außerdem den Verlust der Eingangsspannung mittels des damit verbundenen plötzlichen Spannungseinbruches fest, so daß die Station noch flüchtige Daten speichern und das Programm sinnvoll abbrechen kann, wobei die Station für diese letzten Aktionen vor einem endgültigen Verlust der Versorgungsspannung noch durch einen lokalen Energiepuffer versorgt bleibt. Die Überwachungsschaltung kann außerdem einen temporären Einbruch der Eingangsspannung durch Überbelastung, z.B. beim Motorstart, feststellen, so daß die Station anwendungsbezogen Verbraucher abschalten kann, um die Batterie zu schonen.

Die Sende/Empfangsschaltung 20 ist über eine Verbindung 21 mit dem Mikrocontroller 40 verbunden, um darüber die vom Bus empfangenen Daten an den Mikrocontroller abzugeben oder von diesem auszusendende Daten zu erhalten.

Die Elemente 16, 18, 22, 24 und 26 werden im wesentlichen von der Versorgungsspannung VB gespeist, so daß sie ständig aktiv sind, auch wenn die Spannungsregler 12 und 14 abgeschaltet sind.

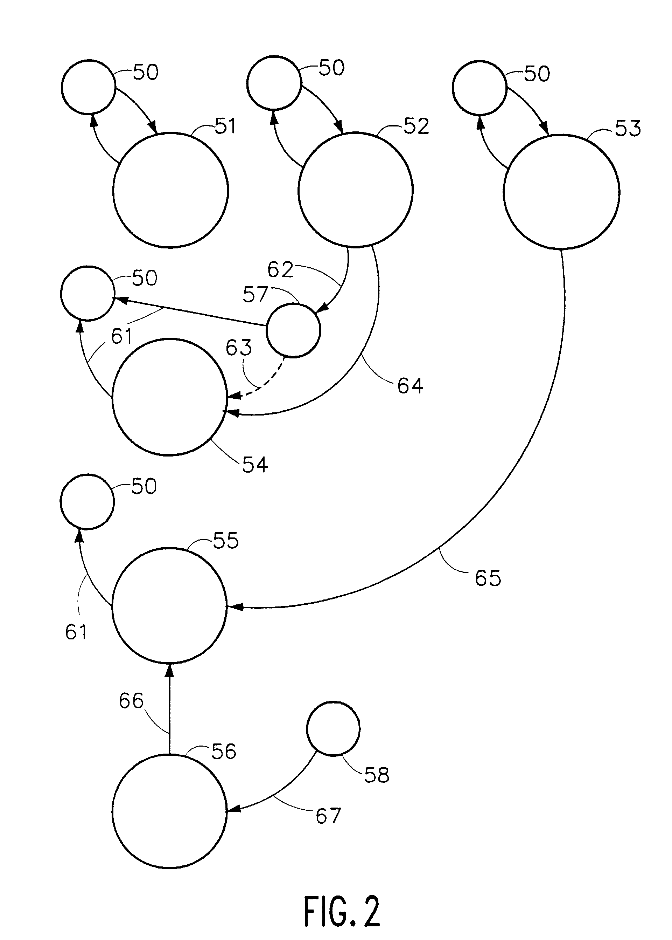

In den Fig. 2 bis 4 sind die Betriebszustände graphisch dargestellt, wobei V1 die Versorgungsspannung für den Mikrocontroller und V2 die Versorgungsspannung für die Peripherie und den Signalumformer darstellen und an- und abgeschaltet werden können. Der Signalumformer (SF) kann im normalen Betrieb serielle Daten senden und empfangen und in seinem Stromsparbetrieb (bereit) nur noch Weckanforderungen empfangen. Außerdem kann sich der Signalumformer bezüglich der Leitungen zu anderen Stationen im System hochohmig verhalten. Der Watchdog (WD) kennt in seinem normalen Betrieb kurze Perioden zur Softwareüberwachung und lange bzw. sehr lange Perioden zum zyklischen Wecken der Station aus dein Bereitschaftsbetrieb bzw. dem Stromsparbetrieb. Außerdem überwacht der Watchdog den Mikrocontroller nach einem Reset (starten).

In diesem Ausführungsbeispiel werden die verschiedenen Selbstüberwachungsfunktionen, Warnfunktionen und Resetquellen unterteilt in
Warnfunktionen mittels Interrupt, wenn der Mikrocontroller nicht in seiner
Programmbearbeitung beeinträchtigt ist, z.B.
Jump-Start,
Spannungseinbruch an der Eingangsspannung,
baldiger Spannungsverlust,
Fehler beim Signalumformer,
Übertemperatur Meldung als Vorwarnung zu einem Übertemperatur Schutz,
Unterspannung bei der anderen Versorgungsspannung,
und Rückfall-Funktionen mittels Reset, wenn der Mikrocontroller in seiner Funktion temporär beeinträchtigt ist, z.B. bei
temporären Fehlern im Programmablauf,
nicht beantwortetem Warn-Interrupt,
nicht beantwortetem Wake-Up Interrupt,
nicht beantwortetem Warm-Start, z.B. als Wake-Up,
und autonome, Mikrocontroller-unabhängige, permanente Rückfall-Funktionen, wenn der Mikrocontroller nicht mehr funktioniert, z.B. bei
permanent fehlerhafter Versorgungsspannung am Mikrocontroller,
bei nicht beantwortetem Kalt- oder Warm-Start des Mikrocontroller,
bei Übertemperatur Schutz (Schutz vor Selbstzerstörung der integrierten Komponente).

In Fig. 2 bedeuten die Zustände
50 Wechsel der Betriebsart; vom Mikrocontroller aus nur in den NB, BB und SB,
51 NB mit V1, V2 an,SF normal, WD normal/aus,
52 BB mit V1 an, V2 an/aus, SF bereit, WD lang/aus,
53 SB mit V1 aus, V2 aus, SF bereit, WD sehr lang/aus,
54 WS mit V1 an, V2 wie zuvor, SF wie zuvor,WD starten für Resetimpulse,
55 KS mit V1 an, V2 aus, SF = bereit, WD starten, Reset = V1-gesteuert (bei Wdh. -> Impuls),
56 UR mit V1 aus, V2 aus, SF hochohmig, WD aus,
57 INT,
58 jeder Zustand,
und die Übergänge
61 SCW,
62 INT-maskierteWeckanforderung (wenn Weckanforderungen weder INT-maskiert noch RESET-maskiert sind: Rückfall nach RESET),
63 kein SCW in WD-Periode
64 RESET-maskierte Weckanforderung, RESET-maskierter zyklischer Start durch WD,
65 alle lokalen Weckanforderungen, übertragene Weckanforderung, zyklisches Wecken durch WD,
66 erste Spannungsversorgung der integrierten Komponente,
67 Verlust der Versorgungsspannung bei der integrierten Komponente.

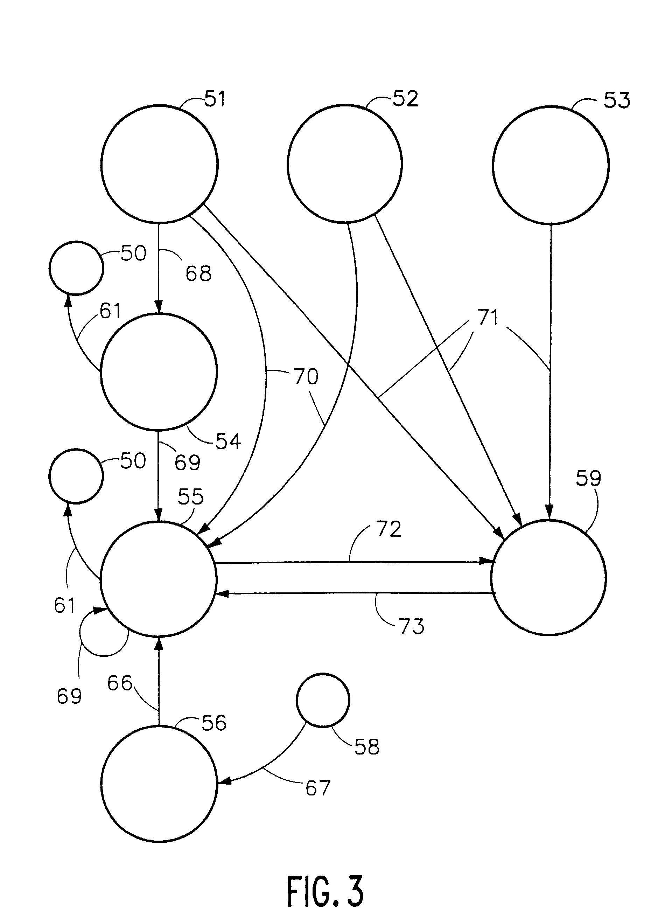

In Fig. 3 bedeuten zusätzlich der Zustand
59 VR mit V1 aus, V2 aus, SF bereit, WD aus,
und die Übergänge
68 WD-Überlauf (normal),
69 WD-Überlauf (starten),
70 Unterspannung V1,
71 Übertemperatur-Schutz,
72 keine Weckanforderung für lange Zeit oder Übertemperatur-Schutz,
73 Weckanforderung (wenn vorheriger Zustand "KS") oder kein
Übertemperatur-Schutz mehr erforderlich.

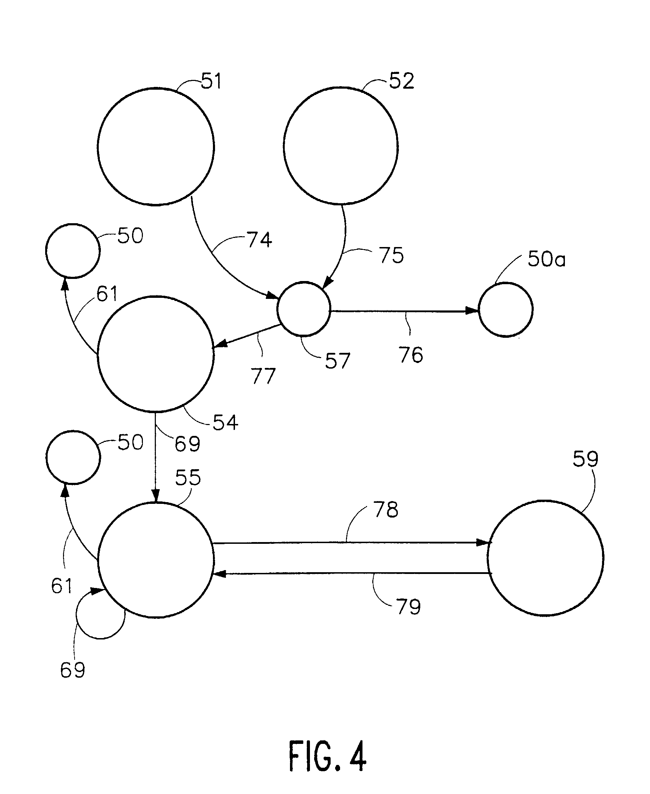

In Fig. 4 bedeuten zusätzlich der Zustand
50a Wechsel der Betriebsart, wobei der Mikrocontroller beliebige
Rückfallverhalten selbst einstellen kann,
und die Übergänge
74 maskierte Interrupts: Fehler beim SF, V2 Unterspannung, Jump Start, Übertemperatur-Warnung, Klemme 30 Unterbrechung,
75 maskierte Interrupts,
76 SCW (nimmt auch Interrupt zurück),
77 kein SCW innerhalb WD-Periode,
78 keine Weckanforderung für lange Zeit,
79 Weckanforderung.

Für alle Figuren bedeuten
SCW serielles Codewort zur Wahl der Betriebsart und Triggern des WD,
NB normaler Betrieb,
BB Bereitschaftsbetrieb,
SB Stromsparbetrieb,
WS Warmstart ohne Veränderung von V1,
KS Kaltstart, möglicherweise mit Hochlaufen von V1,
UR unversorgter Rückfall-Betrieb,
SF Signalumformer für serielle Daten,
WD Watchdog zur Programmüberwachung,
V1 Versorgungsspannung des Mikrocontrollers,
V2 Versorgungsspannung des Signalumformers und der anwendungsbezogenen Komponenten,
INT Interrupt.

## Patentansprüche

1. Station für ein System zum Übertragen von Daten zwischen einer Anzahl Stationen, die über einen gemeinsamen Bus miteinander verbunden sind, wobei die Station wenigstens folgende Elemente enthält
- einen Mikrocontroller,
- eine damit gekoppelte Sende/Empfangsschaltung, die mit dem Bus verbunden ist, und
- eine Zeitüberwachungsschaltung (Watchdog) zum Erzeugen von Rücksetzsignalen für den Mikrocontroller
wobei die Station sich in einem normalen Betriebszustand oder in wenigstens einem weiteren Betriebszustand, vorzugsweise einem Bereitschaftszustand befinden kann und wobei der Watchdog unter vorgegebenen Bedingungen Rücksetz-Signale oder Unterbrechungssignale an den Mikrocontroller liefert, dadurch gekennzeichnet,
daß die Station einen ersten Spannungsregler enthält und daß wenigstens ein zweiter Spannungsregler vorgesehen ist der die Sende-Empfangsschaltung speist, wobei der erste Spannungsregler ausschließlich den Mikrocontroller speist und beide Spannungsregler abschaltbar sind, daß die Anzahl möglicher Betriebszustände durch Verknüpfung von Steuersignalen der einzelnen Elemente auf vorgegebene Betriebszustände begrenzt ist, und daß durch Verknüpfung von Signalen der einzelnen Elemente autonom ohne Mitwirkung des Mikrocontroller Teilfunktionen der Station, insbesondere Rückfallfunktionen, einstellbar sind.

2. Station nach Anspruch 1,
dadurch gekennzeichnet, daß der Watchdog und der zweite Spannungsregler derart miteinander verknüpft sind, daß eine vorgegebene Anzahl aufeinanderfolgender Rücksetz-Signale des Watchdog den zweiten Spannungsregler abschaltet.

3. Station nach Anspruch 1,
dadurch gekennzeichnet, daß der Watchdog, die beiden Spannungsregler und die Sende/Empfangsschaltung derart miteinander verknüpft sind, daß bei fehlender Übertragung von Daten auf den Bus eine vorgegebene Anzahl von Rücksetz-Signalen des Watchdog beide Spannungsregelschaltungen abschaltet.

4. Station nach Anspruch 1, bei der im Bereitschaftszustand der zweite Spannungsregler abgeschaltet ist,
dadurch gekennzeichnet, daß erst durch ein Trigger-Signal des Mikrocontroller an den Watchdog der zweite Spannungsregler eingeschaltet wird.

5. Station nach Anspruch 1, die sich in einem Stromspar-Zustand befindet,
dadurch gekennzeichnet, daß der Watchdog anstelle der Erzeugung von Rücksetz-Signalen periodisch kurze Einschalt-Signale für beide Spannungsregler erzeugt.

6. Station nach Anspruch 1, die sich in einem Stromspar-Zustand befindet,
dadurch gekennzeichnet, daß die Sende/Empfangsschaltung bei Empfang einer Weckanforderung über den Bus die beiden Spannungsregler autonom einschaltet.

7. Station nach einem der vorhergehenden Ansprüche,
dadurch gekennzeichnet, daß die beiden Versorgungsspannungen und die Sende/Empfangsschaltung derart miteinander verknüpft sind, daß gemeinsame Steuersignale für die einzelnen Betriebszustände alle Elemente nur gemeinsam und zeitgleich in einen anderen Betriebszustand umschalten.

8. Station nach Anspruch 5 und 6, wobei die Station Weckmittel zur Erzeugung von lokalen Weckanforderungen aufweist,
dadurch gekennzeichnet, daß der Watchdog, die Sende/Empfangsschaltung und die Weckmittel derart miteinander verknüpft sind, daß der Watchdog abhängig davon, ob eine zyklische. eine lokale oder eine übertragene Weckanforderung auftritt und abhängig davon, in welchem Zustand die Station sich befindet, entweder ein Unterbrechungssignal oder ein Rücksetz/Signal an den Mikrocontroller sendet.

## Claims

1. A station for a system for the transmission of data between a plurality of stations which are connected to one another via a common bus, the station including at least the following elements
- a microcontroller,
- a transmit/receive circuit coupled to said microcontroller and connected to the bus, and
- a timing circuit (watchdog) for the generation of reset signals for the microcontroller,
which station can be in a normal mode of operation or in at least one further mode of operation, preferably in a standby mode, and
the watchdog supplying reset signals or interrupt signals to the microcontroller under given conditions, characterized in that
in that the station includes a first voltage regulator and in that there has been provided at least a second voltage regulator which powers the transmit-receive circuit, the first voltage regulator exclusively powering the microcontroller and both voltage regulators being capable of being disabled,
in that the number of possible modes of operation is limited to given modes of operation by linking of the control signals of the individual elements, and
in that by linking of the control signals of the individual elements sub-functions of the station, particularly default functions, can be set autonomously without participation of the microcontroller.

2. A station as claimed in Claim 1,
characterized in that the watchdog and the second voltage regulator are linked to one another in such a manner that the second voltage regulator is disabled by a given number of successive reset signals from the watchdog.

3. A station as claimed in Claim 1,
characterized in that the watchdog, the two voltage regulators and the transmit/receive circuit are linked to one another in such a manner that in the absence of the transmission of data via the bus the two voltage regulators are disabled by a given number of reset signals.

4. A station as claimed in Claim 1, in which the second voltage regulator is disabled in the standby mode,
characterized in that the second voltage regulator is turned on only by a trigger signal from the microcontroller to the watchdog.

5. A station as claimed in Claim 1, which is in a power-saving mode,
characterized in that instead of generating reset signals the watchdog periodically generates brief turn-on signals for both voltage regulators.

6. A station as claimed in Claim 1, which is in a power-saving mode,
characterized in that the transmit/receive circuit autonomously turns on both voltage regulators upon reception of a wake-up request via the bus.

7. A station as claimed in any one of the Claims,
characterized in that the two supply voltages and the transmit/receive circuit are linked to one another in such a manner that common control signals for the individual modes of operation switch all the elements to another mode of operation only jointly and simultaneously.

8. A station as claimed in Claim 5 or 6, the station including wake-up means for the generation of local wake-up requests,
characterized in that the watchdog, the transmit/receive circuit and the wake-up means are linked to one another in such a manner that the watchdog transmits either an interrupt signal or a reset signal to the microcontroller depending on whether a cyclic, a local or a transmitted wake-up request appears and depending on the mode of operation of the station.

## Revendications

1. Station pour un système de transmission de données entre un nombre de stations qui sont reliées entre elles par l'intermédiaire d'un bus commun, la station contenant au moins les éléments suivants :
- une microcommande,
- un circuit d'émission/réception couplé à celle-ci qui est relié au bus et
- un circuit de surveillance temporelle (chien de garde) en vue de la production de signaux de réinitialisation pour la microcommande,
la station pouvant se trouver dans un mode de fonctionnement normal ou dans au moins un autre mode de fonctionnement, de préférence un mode d'attente, et le chien de garde délivrant dans des conditions préalablement déterminées des signaux de réinitialisation ou des signaux d'interruption à la microcommande,
caractérisée en ce que la station contient un premier régulateur de tension et qu'au moins un deuxième régulateur de tension est prévu et alimente le circuit d'émission/réception, le premier régulateur de tension alimentant exclusivement la microcommande et les deux régulateurs de tension pouvant être mis hors service, que le nombre de modes de fonctionnement possibles est limité par la liaison des signaux de commande des différents éléments à des états de fonctionnement préalablement déterminés et que, par liaison des signaux des différents éléments, les fonctions partielles de la station, en particulier les fonctions de retour, peuvent être réglées de manière autonome sans le concours de la microcommande.

2. Station selon la revendication 1,
caractérisée en ce que le chien de garde et le deuxième régulateur de tension sont reliés entre eux de telle sorte qu'un nombre préalablement déterminé de signaux de réinitialisation successifs du chien de garde mette hors tension le deuxième régulateur de tension.

3. Station selon la revendication 1,
caractérisée en ce que le chien de garde, les deux régulateurs de tension et le circuit d'émission/réception sont reliés entre eux de telle sorte qu'à défaut de transmission de données sur le bus, un nombre préalablement déterminé de signaux de réinitialisation du chien de garde met hors tension les deux circuits régulateurs de tension.

4. Station selon la revendication 1, le deuxième régulateur de tension étant mis hors tension en mode d'attente,
caractérisée en ce que le deuxième régulateur de tension est mis sous tension seulement par un signal de déclenchement de la microcommande sur le chien de garde.

5. Station selon la revendication 1 qui se trouve en mode économique,
caractérisée en ce que le chien de garde produit périodiquement de courts signaux de mise sous tension pour les deux régulateurs de tension à la place de la production de signaux de réinitialisation.

6. Station selon la revendication 1 qui se trouve en mode économique,
caractérisée en ce que le circuit d'émission/réception met sous tension de manière autonome les deux régulateurs de tension en cas de réception d'une demande de réveil par l'intermédiaire du bus.

7. Station selon l'une des revendications précédentes,
caractérisée en ce que les deux tensions d'alimentation et le circuit d'émission/réception sont reliés entre eux de telle sorte que des signaux de commande communs pour les différents modes de fonctionnement ne commutent tous les éléments qu'ensemble et de manière synchronisée dans un autre mode de fonctionnement.

8. Station selon l'une des revendications 5 et 6, la station présentant des moyens de réveil en vue de la production de commandes locales de réveil, caractérisée en ce que le chien de garde, le circuit d'émission/réception et les moyens de réveil sont reliés entre eux de telle sorte que le chien de garde transmette à la microcommande soit un signal d'interruption, soit un signal de réinitialisation indépendamment du fait qu'il se produise une commande de réveil transmise, locale ou cyclique et quel que soit l'état dans lequel se trouve la station.
